Europäisches Patentamt

**European Patent Office**

Office européen des brevets

(19)

(11) Publication number: **0 039 475**

**B1**

(12)

# EUROPEAN PATENT SPECIFICATION

(45) Date of publication of patent specification: **13.06.84**

(51) Int. Cl.³: **H 04 B 9/00**

(21) Application number: **81103215.0**

(22) Date of filing: **29.04.81**

(54) Rotary annular signal data coupler.

<table>
<tr><td>

(30) Priority: **05.05.80 US 146283**

(43) Date of publication of application:
**11.11.81 Bulletin 81/45**

(45) Publication of the grant of the patent:
**13.06.84 Bulletin 84/24**

(84) Designated Contracting States:
**DE FR GB**

(56) References cited:
**DE - A - 2 237 695**
**GB - A - 2 007 355**

</td><td>

(73) Proprietor: **International Standard Electric Corporation**
**320 Park Avenue**
**New York New York 10022 (US)**

(72) Inventor: **Kruger, Bradford Eugene**
**5837 Valerie Avenue**
**Woodland Hills, CA. (US)**

(74) Representative: **Graf, Georg Hugo, Dipl.-Ing. et al,**
**c/o Standard Elektrik Lorenz AG Patent- und Lizenzwesen Postfach 300 929 Kurze Strasse 8 D-7000 Stuttgart 30 (DE)**

</td></tr>
</table>

Courier Press, Leamington Spa, England.

## Description

The invention relates to a rotary annular signal coupler as set forth in the preamble of claim 1. A rotary annular signal coupler of this kind is disclosed in DE—A—2 237 695.

The coupler described there permits information to be transferred between a fixed apparatus and an apparatus rotating concentrically therewith by means of light beams. Two bundles of optical fibers are associated with a light transmitter and a light-to-electric transducer, respectively, and each of them is divided into partial bundles having window-shaped end faces. In this manner, a number of "transmit windows" and a number of "receive windows" are obtained. The windows are so arranged that information can be transferred between the two rings irrespective of the angular position of the two rings with respect to each other.

The Patent Application GB—A—2 007 355 discloses an apparatus which includes light transmitters on one of the two members rotatable with respect to each other, and light-to-electric transducers on the other. This apparatus, too, permits continuous information transfer between the two members movable relative to each other.

The object of the invention is to provide a device of the kind disclosed in DE—A—2 237 695 for transferring information between two members rotating about a common axis which is simple in construction and tolerant of component failures.

This object is attained by the means set forth in claim 1. Developments of the invention are claimed in the subclaims.

The novel coupler provides redundancy and is tolerant of partial failure of components. It is also possible to provide for multiplex operation. The coupler is particularly adapted for the transmission of digital signals.

The invention will now be explained, by way of example, with reference to Figs. 1 to 5 of the accompanying drawings, in which:

Fig. 1 is an exploded view of a stator and rotor assembly according to the invention.

Fig. 2 is a cross-sectional view taken through any·of the stator transmission windows according to Fig. 1 but with the rotor ring properly interfaced with the stator.

Fig. 3 is a detail of typical stator illumination with a signal-modulated light beam.

Fig. 4 is a schematic block diagram of a system and electronic components therefor, according to the invention.

Fig. 5 depicts relative rotor and stator transmission window geometry.

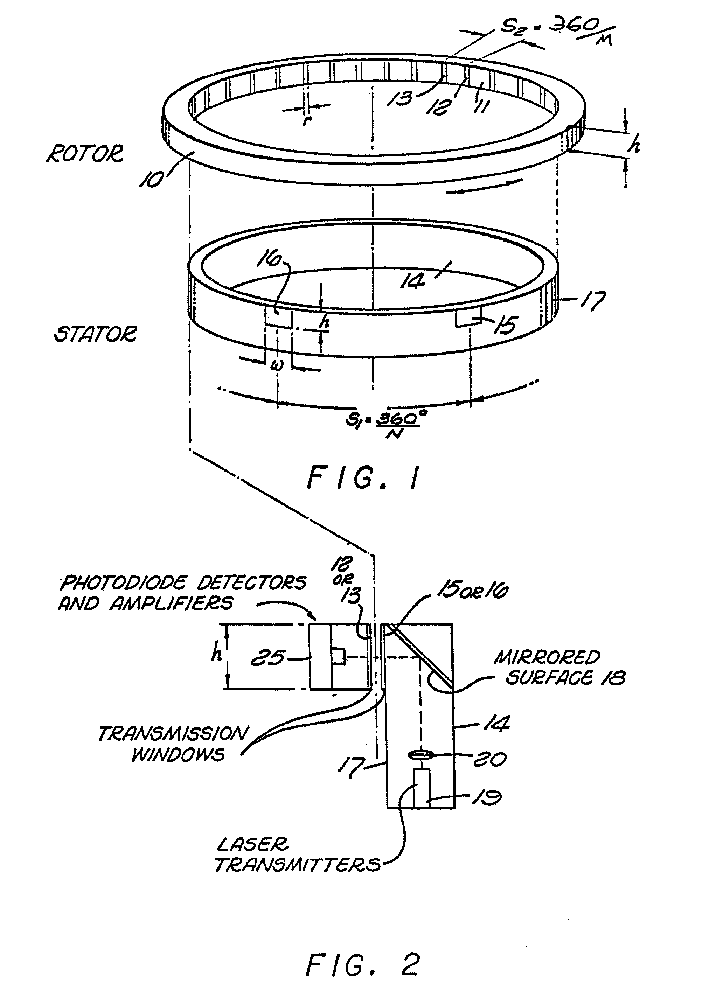

Referring now to Fig. 1 a stator assembly generally at 17 and a rotary assembly generally at 10 are shown in exploded relationship for clarity. Actually, it will be realized that, in operation, the rotor assembly 10 fits rotatably around the periphery of 17, with its h dimension matching that of the h dimension of the light transmission windows, typically 15 and 16 of the stator 17. The inside surface of the rotor assembly 10 is identified as 11 on Fig. 1 and is divided by a succession of light transmission windows typically 12 and 13. These light transmission windows appear only at the outside surface of stator housing 17 and not on the inside surface 14. However, the converse is true of the rotor assembly 10, namely that the windows appear on the inside surface 11 but not the outside surface of rotor 10.

The stator assembly 17 is actually a hollow annular housing, enclosing an annular-shaped interior space. Substantially the same is true of the rotor assembly 10. Referring now to Fig. 2, its sectional view taken transversely (radially) through one of the aforementioned light transmission windows and the stator assembly 17 is shown. A laser transmitter 19 with lens system 20 directs a modulated light beam axially onto a mirrored surface 18 and thence, radially by reflection to pass through the associated stator light transmission window (15 or 16, for example). This light signal engages and enters any of the rotor windows such as 12 or 13, etc., thereby illuminating each corresponding light-to-electric signal transducer 25.

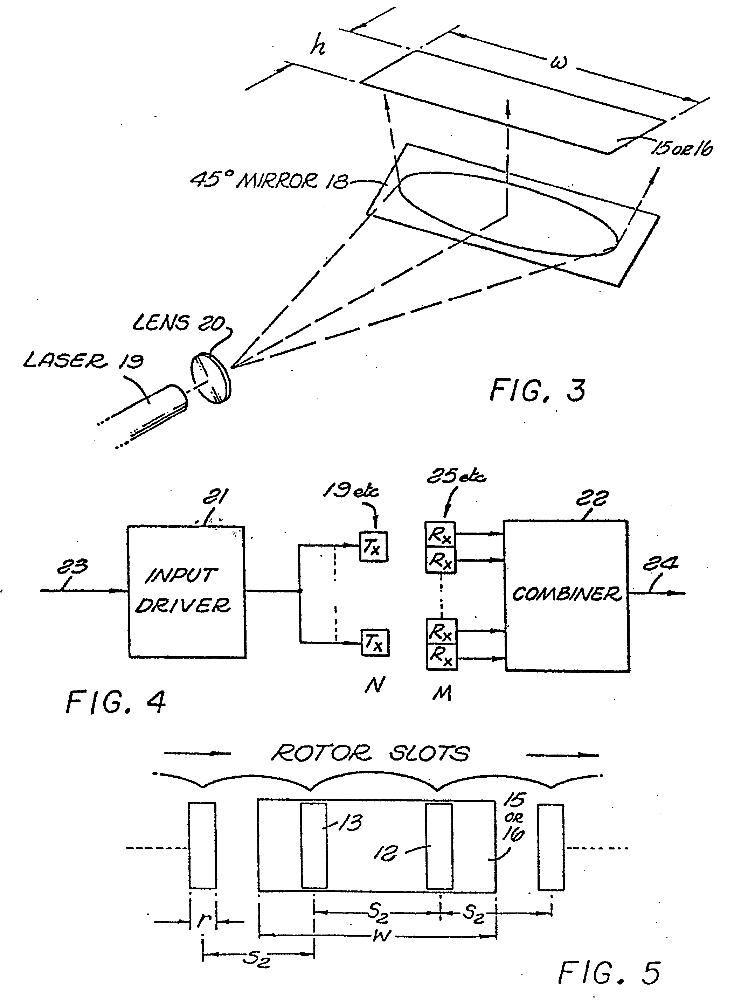

It will be noted that each of the stator light transmission windows 15, 16 etc. has a circumferential dimension w and axial height dimension h. Fig. 3 indicates the nature of the lens system 20 is such as to illuminate each corresponding stator light transmission window at least roughly uniformly in a pattern shown on the mirror 18 which, when reflected to the corresponding stator window approximately illuminates the entire window. A generator such· as a laser diode at 19 inherently transmits a fan beam of light which is further spread by divergent optics (lens system) at 20.

Referring now to Fig. 5, the relative geometry of rotor and stator slots (window) is depicted. It will be noted that rotor windows have width r and are spaced by a circumferential amount $S_2$, whereas the stator slots are spaced

$$S_1 = \frac{360}{N}$$

in degrees. The spacing of the rotor slots $S_2$ is made equal to

$$\frac{w-r}{2}$$

so that a stator window always overlaps at least two rotor windows. If there are M rotor windows (slots), then M is obviously

$$\frac{360}{S_2}$$

from these relationships, and the number of rotor windows, each of circumferential width r can be determined. The annular enclosure curved inner and outer perimeter surfaces are referred to hereinafter as axially extending surfaces. Each rotor window, of course, has an associated light-to-electric transducer 25 as depicted in Fig. 2, and each stator window has an associated illuminating source 19 and mirror surface 18. According to the arrangement suggested by Fig. 1, N such stator windows spaced circumferentially by

$$\frac{360°}{N}$$

are contemplated. Quite obviously a single stator window with associated means for illuminating it with modulated light energy would provide the function desired, except that no redundancy would exist in the event of failure of the illuminating apparatus.

Referring now to Fig. 4, a typical arrangement providing the electronic apparatus needed is illustrated. An input driver 21 receives an electrical signal at input 23. This signal may be multiplexed, or may in fact be a plurality of separate signals each representing a desired function to be effected in the antenna or other apparatus rotating with rotor 10. The inherent bandwidth of the optical medium is so high that color, (frequency) or other multiplexing techniques may be employed. Thus, the input driver 21, which includes the appropriate amplification for driving the laser sources 19 may include the desired multiplexing circuits, for example, of the same character well-known and well understood in the fiber optic communication art.

Each of the N transmitting light sources 19 is identified as $T_x$ and each of the M rotor light-to-electric transducers $R_x$ would operate at all times as the rotor assembly 10 turns about the common central axis it shares with the stator assembly. That is, the foregoing assumes N stator windows such as 15 and 16 each with associated source and the relative rotor window geometry depicted in Fig. 5. Finally, the combiner 22 which is receptive to the outputs of all transducers $R_x$ may provide a simple multiple input OR circuit having common output 24, or alternatively, a complexed "voting" scheme might be incorporated in combiner 22 and could be based on some criterion pertinent to a particular electronic radar system with which the combination of the invention is included.

The vertical orientation of the rotor and stator windows minimizes the collection of foreign matter thereon, and obviously the structure could be modified to place the rotor annulus within the stator, in which case stator windows would be on the internal surface and rotor windows would be on the outside surface of the rotor annulus. Still further, the illuminated windows could be in the rotor assembly and the larger number of signal receiving windows could be placed in the stator if this variation were consistent with signal flow considerations.

Suitable materials and components are readily selected by those of skill in the electrical and mechanical arts, there being no requirements not evident herein and no considerations or tolerances. Both the rotor and stator interior annular spaces may be sealed, if operation in a particular hostile environment is contemplated. If such sealing is to be employed, both the rotor and stator windows may be fabricated from a suitable glass or transparent material, adhesively or hermetically bonded to the shell of the enclosure.

From the foregoing description, it will be realized that the present invention provides a highly failure-resistant signal data transmission medium for applications such as an around-the-mast radar antenna arrangement.

It will be noted that digital signals transferred redundantly from more than one stator window through more than one rotor window arrive at the light-to-electric transducers 25 time synchronously. The result of this synchronism at the output of combiner 22 is that the original transfer is uninterrupted and unaffected by rotor/stator relative angular velocities from zero up to a mechanically achievable maximum. Moreover, the sense of rotor/stator relative rotation has no effect on the operation of the device.

## Claims

1. Rotary annular signal coupler for transferring information by means of light from a first apparatus (17) to a second apparatus (10), the two apparatuses having a common axis of rotation and being concentric with each other, and at least one of the apparatuses being capable of performing rotary motions around the common axis of rotation, comprising a light source in the first apparatus (17) and a light-to-electric transducer in the second apparatus (10), the opposite walls (11, 14) of the two apparatuses containing light-transmissive windows (12, 13, 15, 16), the first apparatus (17) having at least one window (15, 16) through which the information-transmitting light beam passes to a window of the second apparatus, and the second apparatus (10) having two or more second windows (12, 13), and the number and dimensions of the windows being so chosen that continuous information transfer is possible between the two apparatuses, characterized in that each of the two apparatuses (17, 10) has an annular-shaped cavity formed in said opposite walls and in which said first and second windows are housed, that each of the second windows (12, 13) has one light-to-electric transducer (25) associated therewith, that the spacing ($S_2$) of the second windows (12, 13) in the second apparatus (10) is equal to

$$\frac{w-r}{2},$$

where w is the width of the first window (15 or 16) in the direction of the circumference of the apparatus and greater than r, and r is the width of a second window (12 or 13) in the direction of the circumference, that the second windows (12, 13) are uniformly distributed about the circumference of the second apparatus (10), and that each of the first windows (15, 16) has a light source (Tx) associated therewith.

2. A rotary annular signal coupler as claimed in claim 1, characterized in that all light sources radiate the same signals in time-coincident fashion.

3. A rotary annular signal coupler as claimed in claim 1 or 2, characterized in that the output signals of the light-to-electric transducers (Rx) are applied to a combiner (22).

4. A rotary annular signal coupler as claimed in any one of the preceding claims, characterized in that the light sources radiate the light beam axially, that a lens system (20) and a mirror (18) are provided which shape and redirect the light beam so that it passes through the windows (12, 13, 15, 16) in a direction perpendicular to the axis of rotation, and that the first window (15 or 16) associated with the light source (19) is substantially illuminated (Fig. 3).

**Patentansprüche**

1. Rotierender, ringförmiger Signalkoppler zur Übertragung von Informationen mittels Licht von einer ersten Einrichtung (17) zu einer zweiten Einrichtung (10), bei dem die beiden Einrichtungen eine gemeinsame Rotationsachse aufweisen, zueinander konzentrisch angeordnet sind, und zumindest eine der beiden Einrichtungen Drehbewegungen um die gemeinsame Achse ausführt, bei dem in der ersten Einrichtung (17) eine Lichtquelle und in der zweiten Einrichtung (10) ein optisch/elektrischer Wandler vorgesehen ist, bei dem die einander gegenüberliegenden Wände (11, 14) der beiden Einrichtungen lichtdurchlässige Fenster (12, 13, 15, 16) enthalten, bei dem in der ersten Einrichtung (17) mindestens ein Fenster (15, 16) vorgesehen ist, durch das der Informationen übertragende Lichtstrahl zu einem Fenster in der zweiten Einrichtung gelangt, und bei dem in der zweiten Einrichtung (10) zwei oder mehr zweite Fenster (12, 13) vorgesehen sind, wobei die Anzhal und die Abmessungen der Fenster so gewählt sind, daß zwischen den beiden Einrichtungen eine kontinuierliche Informationsübertragung möglich ist, dadurch gekennzeichnet, daß jede der beiden Einrichtungen (17, 10) einen ringförmigen Hohlraum aufweist, deren Wände die einander gegenüber liegenden Wände, in denen die ersten und zweiten Fenster vorhanden sind, bilden, daß jedem der zweiten Fenster (12, 13) ein optisch/elektrischer Wandler (25) zugeordnet ist, daß die Abstände ($S_2$) der zweiten Fenster (12, 13) in der zweiten Einrichtung (10) gleich

$$\frac{w-r}{2}$$

sind mit w gleich Breite des ersten Fensters (15 oder 16) in Richtung des Umfangs der Einrichtung und größer als r, wobei r die Breite eines zweiten Fensters (12 oder 13) in Richtung des Umfangs ist, daß die zweiten Fenster (12, 13) einheitlich über den Umfang der zweiten Einrichtung (10) verteilt sind, und daß jedem der ersten Fenster (15, 16) eine Lichtquelle ($T_x$) zugeordnet ist.

2. Rotierender, ringförmiger Signalkoppler nach Anspruch 1, dadurch gekennzeichnet, daß alle Lichtquellen zeitlich koinzident dasselbe Signal abstrahlen.

3. Rotierender, ringförmiger Signalkoppler nach Anspruch 1 oder 2, dadurch gekennzeichnet, daß die Ausgangssignale der optisch/elektrischen Wandler ($R_x$) einer Überlagerungseinrichtung (22) zugeführt werden.

4. Rotierender, ringförmiger Signalkoppler nach einem der vorhergehenden Ansprüche, dadurch gekennzeichnet, daß die Lichtquellen das Licht in axialer Richtung abstrahlen, und daß ein Linsensystem (20) und ein Spiegel (18) vorgesehen sind, die den Lichtstrahl so formen und umlenken, daß der Lichtstrahl die Fenster (12, 13, 15, 16) in einer Richtung senkrecht zur Rotationsachse passiert und das erste Fenster (15 oder 16), das der Lichtquelle zugeordnet ist, möglichst gut ausgeleuchtet ist (Fig. 3).

**Revendications**

1. Coupleur de signal rotatif annulaire pour le transfert d'information sous forme de lumière d'un premier dispositif (17) à un second dispositif (10), ces deux dispositifs ayant un axe commun de rotation et étant concentriques, au moins l'un de ces dispositifs étant arrangé pour pouvoir effectuer des mouvements rotatifs par rapport à l'axe commun de rotation, ce coupleur comprenant une source de lumière dans le premier dispositif (17) et un transducteur photo-électrique dans le second dispositif, les parois opposées (11, 14) des deux dispositifs contenant des fenêtres transmettant la lumière (12, 13, 15, 16), telles que le premier dispositif (17) possède au moins une première fenêtre (15, 16) à travers laquelle passe le faisceau de lumière transmettant l'information, vers une fenêtre du second dispositif, et que le second dispositif (10) ait au moins deux secondes fenêtres (12, 13), le nombre et les dimensions des fenêtres étant choisis de manière qu'un transfert continu d'information soit possible entre les deux dispositifs, caractérisé en ce que chacun des deux dispositifs (10, 17) possède une cavité de forme annulaire formées dans lesdites parois opposées et dans lesquelles lesdites premières et secondes fenêtres sont disposées, en ce que chacune desdites secondes fenêtres (12, 13) est associée à un traducteur photo-électrique (25), en ce que l'espacement ($S_2$) des secondes fenêtres (12, 13) dans le second dispositif (10) est égal à

$$\frac{w-r}{2},$$

w étant la largeur de la première fenêtre (15 ou 16) dans le sens de la circonférence du dispositif et étant supérieur à r, tandis que r est la largeur d'une seconde fenêtre (12 ou 13) dans le sens de la circonférence, en ce que les secondes fenêtres (12, 13) sont uniformément distribuées le long de la circonférence du second dispositif (10), et en ce que chacune des premières fenêtres (15, 16) est associée à une source de lumière (Tx).

2. Coupleur de signal rotatif annulaire tel que défini dans la revendication 1, caractérisé en ce que toutes les sources de lumière rayonnent les mêmes signaux en coïncidence dans le temps.

3. Coupleur de signal rotatif annulaire tel que défini dans l'une des revendications 1 et 2, caractérisé en ce que les signaux de sortie des transducteurs photo-électriques (Rx) sont appliqués à un combinateur (22).

4. Coupleur de signal rotatif annulaire tel que défini dans l'une quelconque des revendications précédentes, caractérisé en ce que les sources de lumières rayonnent leur faisceau lumineux axialement, un système à lentille 20 et un mirroir (18) étant prévu pour mettre en forme et renvoyer le faisceau de lumière de façon qu'il traverse les fenêtres (12, 13, 15, 16) dans une direction perpendiculaire à l'axe de rotation et que la première fenêtre (15 ou 16) associée à la source de lumière (19) soit largement illuminée (fig. 3).

$S_2 = \dfrac{360}{M}$

13 12 11

r

ROTOR

10

h

STATOR

16

14

17

h

15

ω

$S_1 = \dfrac{360°}{N}$

FIG. 1

PHOTODIODE DETECTORS
AND AMPLIFIERS

12 OR 13

15 OR 16

h

25

MIRRORED
SURFACE 18

14

TRANSMISSION
WINDOWS

17

20

19

LASER
TRANSMITTERS

FIG. 2

1

FIG. 3

FIG. 4

ROTOR SLOTS

FIG. 5

2